# FASCICULE DE BREVET EUROPEEN

(11) **EP 1 459 941 B1**
(45) Date de publication et mention de la délivrance du brevet: **14.06.2006**
(21) Numéro de dépôt: 04290717.0
(22) Date de dépôt: 16.03.2004
(51) Int. Cl.: B60R 19/34, B60R 19/18

(54) **Lot d'au moins deux appuis bas pour pare-choc de véhicule automobile, et lot de deux blocs avant**
Satz von mindesten zwei unteren Abstützungen für Stossdämpfer eines Kraftfahrzeugs und Satz von zwei vorderen Blöcken
Batch of at least two lower support for bumper of a vehicle and batch of two front blocks

(43) Date de publication de la demande: 22.09.2004
(73) Titulaire: COMPAGNIE PLASTIC OMNIUM, 69007 Lyon (FR)
(72) Inventeur: Rocheblave, Laurent, 69530 Brignais (FR); Cheron, Hugues, 01800 Meximieux (FR)
(74) Mandataire: Remy, Vincent Noel Paul

(56) Documents cités:
- EP-A- 1 065 108
- EP-A- 1 238 862
- WO-A-01/28818

## Description

La présente invention concerne un lot d'au moins deux appuis bas pour véhicule automobile, et un lot de deux blocs avant de véhicule automobile.

On connaît déjà, dans l'état de la technique, des appuis bas destinés à protéger les piétons en cas de chocs. Ces appuis bas sont généralement situés à la hauteur du tibia d'un piéton de façon à épargner le piéton lors d'un impact, en limitant la flexion de son genou. De tels appuis bas sont donc agencés suffisamment en avant pour se retrouver le moins possible en retrait par rapport au reste du véhicule.

On sait par ailleurs que les modèles de véhicules automobiles sont de plus en plus variés et qu'il est intéressant, pour les constructeurs, de ne pas multiplier les pièces spécifiques à chacun de ces modèles, mais plutôt d'essayer de les standardiser d'un modèle à l'autre, de façon à limiter leurs coûts de conception et de fabrication. Notamment, la fabrication d'appuis bas standards, pouvant être montés sur des véhicules dont la géométrie avant est différente, pourrait être particulièrement économique.

EP 1 065 108, qui sert de base pour le préambule de la revendication 1, décrit un appui bas pour véhicule automobile, cet appui bas comportant une traverse, des moyens de liaison de la traverse à la structure du véhicule et une partie d'adaptation.

Cependant, les appuis bas actuels sont spécifiques au modèle de véhicule sur lequel ils sont montés, en particulier pour les deux raisons suivantes.

Tout d'abord, les boucliers sont plus ou moins galbés d'un modèle à l'autre, et comme les appuis bas doivent se trouver le plus possible en avant pour épargner le piéton, il est nécessaire de fournir des appuis bas dont le galbe suit le plus possible celui du bouclier.

Ensuite, il est important, en prévision des chocs Danner (chocs « assurance » à 15Km/H) ou à haute vitesse, que la transmission d'efforts à des longerons bas du véhicule par l'appui bas limite les sollicitations selon des directions autres que la direction longitudinale du véhicule, qui pourraient déstabiliser ces longerons, notamment lorsque le choc a lieu contre un obstacle qui n'est pas perpendiculaire à la direction longitudinale du véhicule, c'est à dire à sa direction de déplacement. A cet effet, on conçoit chaque appui bas de manière qu'il ne soit pas trop rigide pour ne pas déstabiliser la structure du véhicule sur laquelle il est fixé, tout en assurant convenablement sa fonction de protection pour les chocs piétons.

Mais si une telle conception est possible pour un modèle donné de véhicule, en adaptant l'appui bas aux spécificités de sa géométrie, elle n'est pas reconductible dans la cadre d'une standardisation, où de telles spécificités sont par définition ignorées.

La présente invention vise à fournir un appui bas standard, qui peut être monté sur des véhicules dont le bloc avant a une géométrie différente, sans pour autant déstabiliser ces véhicules lors de chocs à haute vitesse.

A cet effet, l'invention a pour objet un lot d'au moins deux appuis bas pour véhicule automobile, chaque appui bas comportant une traverse interchangeable avec la traverse de tout autre appui bas du même lot, et des moyens de liaison de la traverse à la structure du véhicule, caractérisé en ce que chaque appui bas comporte une partie d'adaptation à la géométrie du véhicule, les parties d'adaptation étant différentes d'un appui bas à un autre appui bas du même lot, et en ce que les moyens de liaison contiennent de la matière plastique.

Ainsi, on obtient grâce à l'invention un lot de deux appuis bas destinés à être installés sur des véhicules dont le bouclier a une géométrie différente, tout en ayant une partie de cet appui bas, la traverse, commune aux deux véhicules. A cette partie standard de l'appui bas, est ajoutée une partie d'adaptation à la géométrie du véhicule, permettant de conserver la spécificité de chaque appui bas au modèle de véhicule sur lequel il est monté. De plus, comme les moyens de liaison contiennent de la matière plastique, qui leur confère une aptitude à la déformation ou à la rupture à partir d'un seuil d'effort prédéterminé, l'appui bas selon l'invention peut subir des chocs Danner ou haute vitesse, sans déstabiliser la structure du véhicule sur lequel il prend appui.

Par ailleurs, la division de l'appui bas en plusieurs parties permet d'optimiser la fonction de chacune d'entre elles, la traverse étant réalisée dans un matériau ou un ensemble de matériaux lui donnant une stabilité suffisante, et la partie d'adaptation dans un matériau plus léger et facile à mettre en forme.

Par « traverse », on entend une pièce structurelle qui s'étend suivant la largeur du véhicule sur une distance au moins égale à celle séparant les moyens de liaison de l'appui bas sur la structure du véhicule.

Par traverse « interchangeable », on entend une traverse que l'on peut isoler, dissocier fonctionnellement de la partie d'adaptation à la géométrie du véhicule, et monter sur un appui bas du même lot en lieu et place de sa traverse d'origine, sans modifier les performances fixées par le cahier des charges de cet appui bas.

Par « moyens de liaison à la structure du véhicule » , on entend une partie de l'appui bas qui transmet à la structure du véhicule les efforts reçus par sa traverse, notamment lors d'un choc. Comme ils comportent de la matière plastique, ces moyens de liaison sont relativement souples et ne transmettent pas à la structure du véhicule des efforts qui pourraient la déstabiliser. En outre, ces moyens de liaison peuvent comporter des prolonges de longerons ou des absorbeurs de chocs, ce qui leur confère dans ce dernier cas une capacité à absorber une partie de l'énergie reçue.

La structure du véhicule peut comprendre les longerons du véhicule, des longerons inférieurs reliés au berceau du véhicule, des bras s'étendant sous les longerons, parallèlement à ceux-ci, des jambages descendants au droit des faces d'appui des longerons, ou encore une face avant technique.

Selon un mode de réalisation préféré de l'invention, chaque traverse est une poutre. Ainsi, la poutre est standard, elle a une courbure et des dimensions lui permettant d'être montée sur différentes plates-formes de véhicules. De plus, cette poutre est adaptée pour travailler en flexion lors d'un choc.

Selon un autre mode de réalisation, la traverse est une plaque, éventuellement renforcée.

Selon un mode de réalisation de l'invention, chaque partie d'adaptation a une dimension différente dans la direction de déplacement du véhicule.

Eventuellement, chaque partie d'adaptation à la géométrie du véhicule comporte une entretoise, destinée à occuper l'espace laissé libre entre la traverse et la peau de pare-chocs du véhicule. Cette entretoise, disposée juste derrière la peau de pare-chocs, est spécifique à chaque modèle de véhicule et peut donc s'adapter parfaitement au galbe de celui-ci. L'entretoise est configurée de façon à travailler en compression lors d'un choc, pour atteindre rapidement un seuil d'effort à partir duquel la jambe d'un piéton sera mise en rotation.

Par ailleurs, l'entretoise peut être nervurée, par exemple de façon à pouvoir absorber de l'énergie en cas de chocs.

Eventuellement, la partie d'adaptation est venue de matière avec un renfort de pare-chocs, un convergent inférieur, ou une grille d'entrée d'air du véhicule.

Selon un mode de réalisation particulier, la traverse est plus rigide autour des zones destinées à se trouver au droit de la structure du véhicule. Ainsi, ces zones sont suffisamment résistantes pour ne pas se casser, et pour transmettre les efforts aux longerons en cas de chocs.

Par ailleurs, les nervures de l'entretoise peuvent être moins denses dans la région destinée à se trouver au droit des longerons. Ainsi, l'entretoise est moins rigide en ces zones, ce qui permet de compenser l'excès de rigidité de la traverse à cet endroit.

Selon un mode de réalisation de l'invention, la partie d'adaptation à la géométrie du véhicule comprend les moyens de liaison à la structure du véhicule. Ainsi, les moyens de liaison sont différents d'un appui bas à l'autre et sont spécifiques au modèle du véhicule sur lequel il est monté. De plus, les moyens de liaison de chaque appui bas du lot peuvent avoir une dimension différente dans la direction transversale du véhicule, ce qui permet à deux appuis bas du même lot de s'adapter à deux véhicules dont les dimensions transversales sont différentes, par exemple deux véhicules dont les longerons sont différemment espacés.

Selon un autre mode de réalisation, les moyens de liaison sont interchangeables d'un appui bas à l'autre. Ces moyens de liaison comprennent des semelles, agencées entre la traverse et chaque longeron de chaque véhicule. Ces semelles peuvent avoir des dimensions dans la direction transversale supérieures à celles des longerons de chaque véhicule. Ainsi, les semelles peuvent être les mêmes d'un appui bas à l'autre du même lot, tout en pouvant être agencées au droit de longerons dont l'espacement dans la direction transversale est différente d'un véhicule à l'autre.

Eventuellement, les moyens de liaison comprennent deux parties, et la surface de contact entre ces deux parties est globalement un plan vertical dont ia normale intercepte l'axe longitudinal du véhicule à l'avant dudit véhicule. En d'autres termes, les moyens de liaison montés sur l'appui bas ont un plan de contact en biseau qui permet de reprendre l'effort reçu par la traverse. En effet, comme la traverse travaille en flexion, l'effort transmis aux longerons se traduit par une force de direction oblique qui tend à écarter les deux prolonges l'une de l'autre. Le plan biseauté des prolonges est adapté de façon que cette force arrive perpendiculairement à celui-ci et donc que la transmission de l'énergie vers les longerons soit optimale.

Eventuellement, les traverses, les moyens de liaison ou les parties d'adaptations sont réalisés en polyamides chargés, polypropylènes chargés, en matériau thermodurcissable, en matériau composite HTPC, ou en matière plastique renforcée par un tissu tel que le tissu Twintex commercialisé par la société Vetrotex, en combinaison éventuellement avec des inserts en tôle d'acier ou d'aluminium.

De plus, les parties d'adaptation ou les moyens de liaison peuvent être surmoulés sur les traverses.

La présente invention concerne également un lot de deux blocs avant de véhicule automobile, comportant chacun un appui bas faisant partie d'un lot tel que précédemment décrit, dans lequel l'espace entre les deux longerons de chaque bloc avant est différent.

Enfin, la présente invention concerne un lot de deux blocs avant de véhicule automobile, comportant chacun un appui bas faisant partie d'un lot tel que précédemment décrit, dans lequel l'espace compris entre chaque longeron et la peau de pare-chocs de chaque véhicule est différent.

L'invention sera mieux comprise à la lecture de la description qui va suivre, donnée uniquement à titre d'exemple et faite en se référant aux dessins dans lesquels :
- la figure 1 est une vue en perspective d'un appui bas appartenant à un lot selon un premier mode de réalisation de l'invention ;
- la figure 2 est une vue en perspective d'un appui bas appartenant à un lot selon un deuxième mode de réalisation de l'invention ; et
- la figure 3 est une vue du dessus d'une partie d'un appui bas appartenant à un lot selon un troisième mode de réalisation de l'invention.

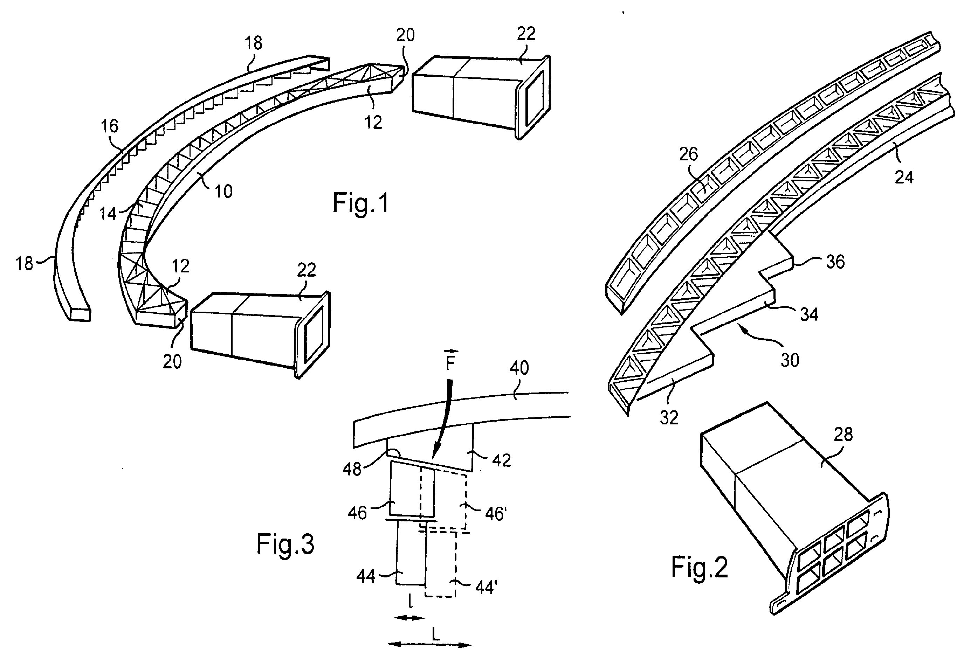

Un appui bas pour véhicule automobile faisant partie d'un lot selon l'invention comporte une traverse 10, telle que celle représentée sur la figure 1. Cette traverse 10 est une poutre courbée, réalisée dans un matériau lui permettant de travailler en flexion. Les matériaux possibles pour réaliser la poutre 10 sont des polyamides chargés, des polypropylènes chargés en talc ou en fibres de verre, des thermodurcissables, des matériaux similaires à ceux fabriqués sous la marque TWINTEX, des matériaux composites hybrides (HTPC), en combinaison ou non avec des inserts plus raides, par exemple en tôle d'aluminium.

La traverse 10 comporte des nervures de façon à la renforcer. On peut voir que le réseau de nervures est plus ou moins dense, comportant des zones 12 de nervurage dense et des zones 14 de nervurage moins dense. Cette variation de densité des nervures est adaptée pour que, lorsque la poutre travaille en flexion, celle-ci ait une grande rigidité autour des zones situées au droit des longerons du véhicule, c'est-à-dire les zones 12, afin d'éviter que cette flexion soit trop grande.

La poutre 10 de l'appui bas représenté sur la figure 1 est interchangeable avec une poutre d'un autre appui bas (non représenté) faisant partie d'un lot selon l'invention. Plus précisément, elle est identique.

L'appui bas comporte en outre une entretoise 16, constituant une partie d'adaptation de l'appui bas à la géométrie du véhicule, spécifique à ce véhicule, et donc différente d'une entretoise d'un autre appui bas du lot selon l'invention. Cette entretoise 16 constitue un élément additionnel de l'appui bas qui vient s'ajouter devant la poutre 10 de façon à combler l'espace situé entre la poutre 10 et le bouclier de pare-chocs du véhicule, et donc de coller au plus proche du galbe de bouclier.

L'entretoise 16 comporte des nervures, de façon à augmenter la rigidité de l'appui bas. Certaines zones 18 de l'entretoise 16 ont un nervurage moins dense. Ces zones sont situées au droit des longerons du véhicule.

Les zones 18 de nervurage moins dense permettent de compenser l'absence de flexibilité de la poutre 10 au droit des longerons. En effet, l'entretoise 16 ne travaille globalement pas en flexion mais en compression ce qui ne nécessite pas d'avoir une grande rigidité au droit des longerons du véhicule.

Ainsi, grâce à l'entretoise 16, l'appui bas de la figure 1 comporte une traverse standard 10, tout en pouvant être monté sur des véhicules dont le bouclier est différent. En effet, l'entretoise 16 peut être plus ou moins grande dans les directions longitudinale X et transversale direction Y, de façon à compenser les diversités de dimensions des différents modèles.

L'appui bas de la figure 1 comporte enfin des moyens de liaison à la structure du véhicule, comprenant une semelle 20, agencée sur la poutre 10, au droit des longerons du véhicule (non représentés) et un absorbeur de chocs 22. Dans ce mode de réalisation, ces moyens de liaison sont les mêmes que ceux d'un autre appui bas du même lot.

Cependant, selon un autre mode de réalisation, les semelles 20 pourraient être fixées, en des emplacements différents d'un appui bas à un autre appui bas du même lot.

Un appui bas faisant partie d'un lot selon un autre mode de réalisation de l'invention comporte, comme on peut le voir sur la figure 2, une poutre 24, une entretoise 26 et un absorbeur de chocs 28, similaires à ceux de la figure 1.

Outre l'absorbeur de chocs 28, les moyens de liaison de la traverse 24 aux longerons du véhicule, dans ce mode de réalisation, comportent des créneaux 30 en matière plastique. Les créneaux 30 comportent trois logements 32, 34, 36, pouvant chacun servir de surface d'appui de l'absorbeur 28. Ces créneaux 30 sont les mêmes sur tous les appuis bas d'un même lot. Mais le logement servant de surface d'appui à l'absorbeur 28 peut changer d'un appui bas à un autre appui bas du même lot. Ainsi, pour un appui bas destiné à être monté sur un petit véhicule, ce sera le logement 36 qui servira de surface d'appui, alors que pour un véhicule de catégorie supérieure, dans lequel les longerons bas sont davantage espacés entre eux, ce sera le logement 32 ou 34 qui servira de surface d'appui.

Sur le mode de réalisation de la figure 3, on peut voir une poutre 40 similaire à celle des figures 1 et 2, sur laquelle est agencée une prolonge 42. L'appui bas de cette figure comporte une entretoise similaire à l'entretoise 16, non représentée.

La prolonge 42 est agencée au droit d'un longeron 44 du véhicule, muni d'un absorbeur 46. La face intérieure 48 de la prolonge 42, destinée à être en regard de l'absorbeur 46, constitue une semelle dont la dimension L dans la direction transversale Y est supérieure à la dimension I du longeron 44 ou de son absorbeur 46 dans la même direction.

Comme on peut le voir sur la figure, la semelle 48 est suffisamment large pour être encore au droit d'un autre longeron 44' et d'un autre absorbeur 46' lorsque l'appui bas est monté sur un véhicule de modèle différent, dans lequel la distance entre les deux longerons est plus faible.

On peut voir sur la figure que la semelle 48 et l'absorbeur 46 se raccordent selon un plan qui n'est pas exactement perpendiculaire à la direction longitudinale X, mais qui est légèrement oblique, tourné vers l'intérieur du véhicule, de façon à pouvoir transmettre au mieux les efforts reçus lors d'un choc au longeron du véhicule.

En effet, lors d'un choc, la poutre 40 reçoit une force considérable, généralement en son centre, dans la partie située entre les deux longerons. Sous l'effet de cette force, la poutre 40 fléchit, absorbe une partie de l'énergie, et transmet le reste aux prolonges 42, sous forme d'une force F. Comme on le voit sur la figure la direction de cette force n'est pas celle de la direction de déplacement X, elle est légèrement oblique, en raison de la flexion de la poutre 40. La semelle 48 de la prolonge 42 est inclinée de façon que cette force F soit sensiblement perpendiculaire à cette semelle 48. Ainsi, la force arrive perpendiculairement à la surface de l'absorbeur 46 qui la reçoit de façon optimale. L'absorbeur est ainsi conçu pour absorber le plus possible de l'énergie d'un choc à haute vitesse, mais au-delà de cette énergie, l'absorbeur minimise les efforts autres que longitudinaux au longeron.

Parmi les avantages de l'invention, on notera que l'on peut réaliser la traverse et la partie d'adaptation dans des matériaux très différents, chacun étant adapté à la fonction qu'il va assurer. En effet, la traverse peut être réalisée dans un matériau qui est adapté pour le travail en flexion, alors que l'entretoise peut être réalisée dans un matériau offrant une résistance rapide et relativement faible pour la cas d'un choc avec la jambe d'un piéton.

On notera également comme avantage que les appuis bas d'un lot selon l'invention sont relativement compacts du fait de leur standardisation sur des véhicules qui peuvent avoir des géométries différentes. Par conséquent, il est particulièrement intéressant de les monter sur des véhicules dans lesquels les entrées d'air sont grandes, et la place faite aux appuis bas restreinte.

On notera enfin que la présente invention ne se limite aux modes de réalisation précédemment décrits.

## Revendications

1. Lot d'au moins deux appuis bas pour véhicule automobile, chaque appui bas comportant une traverse (10, 24, 40) interchangeable avec la traverse de tout autre appui bas du même lot, et des moyens de liaison (20, 22, 28, 30, 42, 46, 46') de la traverse (10, 24, 40) à la structure (44, 44') du véhicule, **caractérisé en ce que** chaque appui bas comporte une partie d'adaptation (16, 26) à la géométrie du véhicule, les parties d'adaptation (16, 26) étant différentes d'un appui bas à un autre appui bas du même lot, et **en ce que** les moyens de liaison (20, 22, 28, 30, 42, 46, 46') contiennent de la matière plastique.

2. Lot selon la revendication 1, dans lequel les appuis bas sont destinés à être installés sur deux véhicules automobiles dont le bouclier a une géométrie différente.

3. Lot selon la revendication 1 ou 2, dans lequel chaque traverse est une poutre (10, 24, 40).

4. Lot selon la revendication 1 ou 2, dans lequel chaque traverse est une plaque renforcée.

5. Lot selon l'une quelconque des revendications 1 à 4, dans lequel chaque partie d'adaptation (16, 26) a une dimension différente dans la direction de déplacement du véhicule (X).

6. Lot selon la revendication 5, dans lequel chaque partie d'adaptation à la géométrie du véhicule comporte une entretoise (16, 26), destinée à occuper l'espace laissé libre entre la traverse (10, 24, 40) et la peau de pare-chocs du véhicule.

7. Lot selon la revendication 6, dans lequel l'entretoise (16, 26) est nervurée.

8. Lot selon la revendication 7, dans lequel les nervures (18) de l'entretoise (16, 26) sont moins denses dans la région destinée à se trouver au droit des longerons du véhicule.

9. Lot selon l'une quelconque des revendications 6 à 8, dans lequel l'entretoise est venue de matière avec un renfort de pare-chocs, un convergent inférieur ou une grille d'entrée d'air du véhicule.

10. Lot selon l'une quelconque des revendications 1 à 9, dans lequel la partie d'adaptation à la géométrie du véhicule comprend les moyens de liaison à la structure du véhicule.

11. Lot selon la revendication 10, dans lequel les moyens de liaison de chaque appui bas du lot a une dimension différente dans la direction transversale du véhicule (Y).

12. Lot selon l'une quelconque des revendications 1 à 11, dans lequel les moyens de liaison (20, 22, 28, 30, 42, 46, 46') sont interchangeables d'un appui bas à l'autre.

13. Lot selon la revendication 12, dans lequel les moyens de liaison (20, 22, 28, 30, 42, 46, 46') de chaque appui bas comprennent des semelles (20, 32, 34, 36, 48), agencées entre la traverse (10, 24, 40) et chaque longeron (44, 44') de chaque véhicule.

14. Lot selon la revendication 13, dans lequel les semelles (48) de chaque appui bas ont des dimensions (L) dans la direction transversale supérieures à celles (I) des longerons de chaque véhicule.

15. Lot selon l'une quelconque des revendications 1 à 14, dans lequel les moyens de liaison comportent des prolonges (42) de longerons.

16. Lot selon l'une quelconque des revendications 1 à 15, dans lequel les moyens de liaison comportent des absorbeurs de chocs (22, 28, 46, 46').

17. Lot selon l'une quelconque des revendications 1 à 16, dans lequel les moyens de liaison comprennent deux parties (42, 46), et la surface de contact (48) entre ces deux partes est globalement un plan vertical dont la normale intercepte l'axe longitudinal (X) du véhicule à l'avant dudit véhicule.

18. Lot selon l'une quelconque des revendications 1 à 17, dans lequel la traverse (10, 24, 40) est plus rigide autour des zones (12) destinées à se trouver au droit de la structure du véhicule.

19. Lot selon l'une quelconque des revendications 1 à 18, dans lequel les traverses (10, 24, 40), les moyens de liaison (20, 22, 28, 30, 42, 46, 46') ou les parties d'adaptation (16, 26) sont réalisés en polyamides chargés, polypropylènes chargés, en matériau thermodurcissable, en matériau composite HTPC, ou en matière plastique renforcée, en combinaison éventuellement avec des inserts en tôle d'acier ou d'aluminium.

20. Lot selon l'une quelconque des revendications 1 à 19, dans lequel les parties d'adaptation (16, 26) ou les moyens de liaison (20, 30, 42) sont surmoulés sur les traverses (10, 24, 40).

21. Lot de deux blocs avant de véhicule automobile, comportant chacun un appui bas faisant partie du lot selon l'une quelconque des revendications 1 à 20, dans lequel l'espace entre les deux longerons de chaque bloc avant est différent.

22. Lot de deux blocs avant de véhicule automobile, comportant chacun un appui bas faisant partie du lot selon l'une quelconque des revendications 1 à 20, dans lequel l'espace compris entre chaque longeron et la peau de pare-chocs de chaque véhicule est différent.

## Claims

1. A batch of at least two motor vehicle low supports, each low support comprising a cross-member (10, 24, 40) interchangeable with the cross-member of any other low support of the same batch, and connection means (20, 22, 28, 30, 42, 46, 46') for connecting the cross-member (10, 24, 40) to the structure (44, 44') of the vehicle, the batch being **characterized in that** each low support includes a matching portion (16, 26) for matching to the shape of the vehicle, the matching portions (16,26) being different from one low support to another low support of the same batch, and **in that** the connection means (20, 22, 28, 30, 42, 46, 46') contain plastics material.

2. A batch according to claim 1, in which the low supports are for installing on two motor vehicles having shields of different shapes.

3. A batch according to claim 1 or claim 2, in which each cross-member is a beam (10, 24, 40).

4. A batch according to claim 1 or claim 2, in which each cross-member is a reinforced plate.

5. A batch according to any one of claims 1 to 4, in which each matching portion (16, 26) presents a different size in the travel direction of the vehicle (X).

6. A batch according to claim 5, in which each matching portion for matching to the shape of the vehicle comprises a spacer (16, 26), for occupying the space left empty between the cross-member (10, 24, 40) and the bumper skin of the vehicle.

7. A batch according to claim 6, in which the spacer (16, 26) is ribbed.

8. A batch according to claim 7, in which the ribs (18) of the spacer (16, 26) are less dense in the region of that is to be in register with the side members of the vehicle.

9. A batch according to any one of claims 6 to 8, in which the spacer is made integrally with bumper reinforcement, the bottom spoiler, or an air inlet grille of the vehicle.

10. The batch according to any one of claims 1 to 9, in which the matching portion for matching to the shape of the vehicle includes means for connection to the structure of the vehicle.

11. A batch according to claim 10, in which the connection means of each low support of the batch presents a size that is different in the transverse direction of the vehicle (Y).

12. A batch according to any one of claims 1 to 11, in which the connection means (20, 22, 28, 30, 42, 46, 46') are interchangeable from one low support to another.

13. A batch according to claim 12, in which the connection means (20, 22, 28, 30, 42, 46, 46') of each low support comprise sole plates (20, 32, 34, 36, 48), arranged between the cross-member (10, 24, 40) and each side member (44, 44') of each vehicle.

14. A batch according to claim 13, in which the sole plates (48) of each low support present dimensions (L) in the transverse direction that are greater than those (ℓ) of the side members of each vehicle.

15. A batch according to any one of claims 1 to 14, in which the connection means include extensions (42) of the side members.

16. A batch according to any one of claims 1 to 15, in which the connection means include impact absorbers (22, 28, 46, 46').

17. A batch according to any one of claims 1 to 16, in which the connection means comprise two portions (42, 46), and the contact surface (48) between these two portions lies generally in a vertical plane of the normal that intersects the longitudinal axis (X) of the vehicle in front of said vehicle.

18. A batch according to any one of claims 1 to 17, in which the cross-member (10, 24, 40) is more rigid around zones (12) that are to be in register with the structure of the vehicle.

19. A batch according to any one of claims 1 to 18, in which the cross-members (10, 24, 40), the connection means (20, 22, 28, 30, 42, 46, 46'), or the matching means (16, 26) are made of filled polyamides, filled polypropylenes, thermosetting material, hybrid thermoplastic composite material (HTPC), or of reinforced plastics material, optionally in combination with steel or aluminum sheet inserts.

20. A batch according to any one of claims 1 to 19, in which the matching portions (16, 26) or the connection means (20, 30, 42) are overmolded on the cross-members (10, 24, 40).

21. A batch of two motor vehicle front units, each including a low support forming part of a batch according to any one of claims 1 to 20, in which the spacing between the two side members of each front unit is different.

22. A batch of two motor vehicle front units, each including a low support forming part of a batch according to any one of claims 1 to 20, in which the spacing between each side member and the bumper skin of each vehicle is different.

## Patentansprüche

1. Satz von mindestens zwei unteren Abstützungen für ein Kraftfahrzeug, wobei jede untere Abstützung eine Querstrebe (10, 24, 40) aufweist, die mit der Querstrebe jeder anderen Abstützung austauschbar ist, sowie Verbindungsmittel (20, 22, 28, 30, 42, 46, 46') der Querstrebe (10, 24, 40) mit der Struktur (44, 44') des Fahrzeugs, **dadurch gekennzeichnet, dass** jede untere Abstützung ein Teil (16, 26) zum Anpassen an die Fahrzeuggeometrie aufweist, wobei die Teile zur Anpassung (16, 26) innerhalb des gleichen Satzes von einer unteren Abstützung zu einer anderen unteren Abstützung unterschiedlich ausfallen, und **dadurch gekennzeichnet, dass** die Verbindungsmittel (20, 22, 28, 30, 42, 46, 46') Kunststoff enthalten.

2. Satz nach Anspruch 1, in dem die unteren Abstützungen zum Einbau in zwei Kraftfahrzeuge vorgesehen sind, deren Stoßfängerabdeckungen eine unterschiedliche Geometrie aufweisen.

3. Satz nach Anspruch 1 oder 2, in dem jede Querstrebe ein Träger (10, 24, 40) ist.

4. Satz nach Anspruch 1 oder 2, in dem jede Querstrebe eine verstärkte Platte ist.

5. Satz nach einem beliebigen der Ansprüche 1 bis 4, in dem jedes Teil zum Anpassen (16, 26) in Fahrtrichtung des Fahrzeuges (X) unterschiedliche Abmessungen aufweist.

6. Satz nach Anspruch 5, in dem jedes Teil zum Anpassen an die Fahrzeuggeometrie ein Distanzstück (16, 26) aufweist, das dafür vorgesehen ist, den zwischen der Querstrebe (10, 24, 40) und dem Stoßfängerüberzug des Fahrzeugs auftretenden Freiraum auszufüllen.

7. Satz nach Anspruch 6, in dem das Distanzstück (16, 26) mit Rippen versehen ist.

8. Satz nach Anspruch 7, in dem die Rippen (18) des Distanzstücks (16, 26) in dem Bereich, der sich senkrecht zu den Längsträgern befinden soll, weniger dicht sind.

9. Satz nach einem beliebigen der Ansprüche 6 bis 8, in dem das Distanzstück an einer Stoßfängerverstärkung, einem unteren Luftkanal oder einem Lufteinlassgitter des Fahrzeugs angeformt wird.

10. Satz nach einem beliebigen der Ansprüche 1 bis 9, in dem das Teil zur Anpassung an die Fahrzeuggeometrie die Verbindungsmittel mit der Fahrzeugstruktur umfasst.

11. Satz nach Anspruch 10, in dem die Verbindungsmittel jeder unteren Abstützung des Satzes eine unterschiedliche Abmessung in der Querrichtung (Y) des Fahrzeugs aufweisen.

12. Satz nach einem beliebigen der Ansprüche 1 bis 11, in dem die Verbindungsmittel (20, 22, 28, 30, 42, 46, 46') zweier unterer Abstützungen austauschbar sind.

13. Satz nach Anspruch 12, in dem die Verbindungsmittel (20, 22, 28, 30, 42, 46, 46') jeder unteren Abstützung Beläge (20, 32, 34, 36, 48) aufweisen, die zwischen der Querstrebe (10, 24, 40) und jedem Längsträger (44, 44') jedes Fahrzeugs angeordnet sind.

14. Satz nach Anspruch 13, in dem die Beläge (48) jeder unteren Abstützung Abmessungen (L) in der Querrichtung aufweisen, die größer als diejenigen (I) der Längsträger jedes Fahrzeugs sind.

15. Satz nach einem beliebigen der Ansprüche 1 bis 14, in dem die Verbindungsmittel Verlängerungen (42) der Längsträger aufweisen.

16. Satz nach einem beliebigen der Ansprüche 1 bis 15, in dem die Verbindungsmittel Stoßabsorber (22, 28, 46, 46') aufweisen.

17. Satz nach einem beliebigen der Ansprüche 1 bis 16, in dem die Verbindungsmittel zwei Teile (42, 46) umfassen und die Berührungsfläche (48) zwischen den beiden Teilen allgemein eine senkrechte Ebene ist, deren Senkrechte die Längsachse (X) des Fahrzeugs im Vorderteil des Fahrzeugs schneidet.

18. Satz nach einem beliebigen der Ansprüche 1 bis 17, in dem die Querstrebe (10, 24, 40) um die Bereiche (12) herum, die senkrecht zur Struktur des Fahrzeuges angeordnet sein sollen, starrer ist.

19. Satz nach einem beliebigen der Ansprüche 1 bis 18, in dem die Querstreben (10, 24, 40), die Verbindungsmittel (20, 22, 28, 30, 42, 46, 46') oder die Teile zur Anpassung (16, 26) aus Polyamid mit einem Füllstoff, Polypropylen mit einem Füllstoff, aus einem wärmeaushärtenden Werkstoff, aus einem HTPC-Verbundmaterial oder einem verstärkten Kunststoff, eventuell mit Einsätzen aus Stahlblech oder Aluminium, hergestellt werden.

20. Satz nach einem beliebigen der Ansprüche 1 bis 19, in dem die Teile zur Anpassung (16, 26) oder die Verbindungsmittel (20, 30, 42) auf den Querstreben (10, 24, 40) ausgeformt sind.

21. Satz von zwei Kraftfahrzeug-Vorderblöcken, von denen jeder eine untere Abstützung aufweist, die Teil des Satzes nach einem beliebigen der Ansprüche 1 bis 20 ist und in denen der Raum zwischen den beiden Längsträgern jedes Vorderblocks unterschiedlich ist.

22. Satz von zwei Kraftfahrzeug-Vorderblöcken, von denen jeder eine untere Abstützung aufweist, die Teil des Satzes nach einem beliebigen der Ansprüche 1 bis 20 ist, in dem der Raum zwischen jedem Längsträger und dem Stoßfängerüberzug jedes Fahrzeugs unterschiedlich ist.
